# EUROPÄISCHE PATENTSCHRIFT

(11) **EP 0 579 594 B1**
(45) Veröffentlichungstag und Bekanntmachung des Hinweises auf die Patenterteilung: **18.10.1995**
(21) Anmeldenummer: 93890141.0
(22) Anmeldetag: 15.07.1993
(51) Int. Cl.: A01D 90/04

(54) **Schneidwerk für einen Ladewagen**
Cutter for forage wagon
Dispositif de coupé pour remorque chargeuse

(30) Priorität: 15.07.1992 AT 1456/92
(43) Veröffentlichungstag der Anmeldung: 19.01.1994
(73) Patentinhaber: MASCHINENBAU OTTO GRUBER GESELLSCHAFT m.b.H., 5760 Saalfelden (AT)
(72) Erfinder: Langreiter, Johannes, A-5760 Saalfelden (AT)
(74) Vertreter: Müllner, Erwin, Dr.

(56) Entgegenhaltungen:
- EP-A- 0 341 508
- AT-B- 303 536
- DE-U- 8 631 062
- DE-U- 8 706 866

## Beschreibung

Die vorliegende Erfindung betrifft ein Schneidwerk für einen Ladewagen mit nebeneinanderliegenden, um eine Achse in einen Förderschacht des Ladwagens schwenkbaren Messern, wobei die Messer durch Verdrehen einer zur Achse parallel angeordneten, und mittels Betätigungsstangen die Messer betätigenden Querwelle einschwenkbar sind. Ein derartiges Schneidwerk ist aus der DE-U-8631062 bekannt.

Ein derartiges Schneidwerk ist ebenfalls aus der DE-OS 28 34 931 bekannt. Der dort beschriebene Ladewagen hat quer zur Fahrtrichtung eine Aufnahmevorrichtung, die das zu ladende Erntegut zum Förderkanal bringt, wo es dann nach oben gefördert wird und in den Laderaum fällt. In den Förderkanal sind mehrere Messer einschwenkbar; die Messer liegen dabei in einer Reihe, die sich parallel zur Aufnahmevorrichtung, also quer zur Fahrtrichtung erstreckt. Die Achse, um die die Messer schwenkbar sind, liegt ebenfalls parallel zur Aufnahmevorrichtung. Die Messer liegen in eingeschwenktem Zustand jeweils zwischen den Förderzinken des Förderrechens,normal zur Aufnahmevorrichtung (also parallel zur Fahrtrichtung); die Schneide liegt schräg zur Förderrichtung, sodaß sich ein ziehender Schnitt ergibt.

Es ist weiters eine Querwelle vorgesehen, die parallel zur Achse, um die die Messer drehbar sind, verläuft. Pro Messer weist die Querwelle einen Mitnehmer auf, der mit der Querwelle drehfest verbunden ist. Je nach Stellung eines an dem Mitnehmer vorgesehenen Bolzens wird das zugehörige Messer bei Drehung der Querwelle durch den Mitnehmer eingerückt oder nicht. Es ist also möglich, nur mit einem Teil der Messer zu arbeiten, wenn man die Bolzen der Mitnehmer der nicht benötigten Messer verschiebt. Will man wieder mit allen Messern arbeiten, muß man die entsprechenden Bolzen wieder zurückverschieben.

Bedenkt man, daß die Anzahl der Messer bei einem Ladewagen relativ groß sein kann (z.B. 21), so ist es ziemlich umständlich, das Schneidwerk so umzustellen, daß es z.B. nur mit einem Drittel der Messer arbeitet.(Bei 21 Messern müssen immerhin 14 Bolzen verschoben werden.)

Aus der CH-PS 642 818 ist eine Vorrichtung zur lösbaren Befestigung eines Schneidmessers einer Ladewagenschneidvorrichtung beschrieben. Die Vorrichtung weist mindestens eine an einem Messerträger festgelegte Halterung für jedes Schneidmesser sowie ein dem Befestigungsbolzen zugeordnetes, das Festlegen des Schneidmessers an der Halterung ermöglichendes Schlitzloch auf. Ein Hinweis, wie das Schneidwerk für einen Ladewagen von einem Betrieb mit allen Messern auf einen Betrieb mit nur einem Teil der Messer gewechselt werden kann, ist dieser Patentschrift nicht zu entnehmen.

Es ist Aufgabe der vorliegenden Erfindung, ein Schneidwerk werk zu schaffen, bei den auf einfache Weise, durch einfache Hebelbedienung, von einem Betrieb mit allen Messern auf einen Betrieb mit nur einem Teil der Messer oder ohne Messer gewechselt werden kann.

Diese Aufgabe wird durch ein Schneidwerk der eingangs genannten Art erfindungsgemäß dadurch gelöst, daß an der Querwelle pro Messer zwei Anlenkpunkte für eine der Betatigungsstangen vorgesehen sind, daß an jeweils nur einem der beiden Anlenkpunkte je eine der Betätigungsstangen mit einem ihrer Enden angelenkt ist und daß das andere Ende der Betätigungsstangen jeweils am zugehörigen Messer oder dessen Halterung angelenkt ist, sodaß je nach Drehstellung der Querwelle keine Messer, ein Teil der Messer, die übrigen Messer oder alle Messer in den Förderschacht eingeschwenkt sind.

Die Betätigungsstangen können also an zwei verschiedenen Anlenkpunkten angelenkt werden; je nachdem, an welchem Anlenkpunkt ein Messer angelenkt ist, gehört es zur ersten oder zur zweiten Messergruppe. Wie anhand des Ausführungsbeispiels noch genauer beschrieben wird, sind - je nach Drehstellung der Querwelle - keine Messergruppe, die erste Messergruppe, die zweite Messergruppe oder beide Messergruppen (alle Messer) in den Förderkanal eingeschwenkt. Damit kann in einfachster Weise nur durch Verdrehen der Querwelle zwischen drei verschiedenen Messerzahlen gewählt werden (mit 0 Stück sogar vier).

Eine Überlastsicherung kann bei diesem Schneidwerk in einfacher Weise dadurch realisiert werden, daß die Betätigungsstangen aus zwei gegen die Wirkung einer Feder ineinanderschiebbaren Teilen bestehen. Bei zu hoher Belastung eines Messers - z.B. infolge eines Fremdkörpers - kann dieses Messer ausschwenken, indem es die Feder zusammendrückt und die Betätigungsstange entsprechend verkürzt. Bei Nachlassen der Belastung drückt die Feder das Messer automatisch wieder zurück.

Es wird bevorzugt, daß für die Messer um die Achse durch Lager schwenkbare Halterungen vorgesehen sind, die jeweils aus zwei parallelen Halteplatten bestehen, zwischen denen die Messer eingesetzt sind, daß die Halteplatten an zwei Stellen durch Verbindungsstücke miteinander verbunden sind, daß die Messer gegenüber der Schneide zwei vom Rand ausgehende Schlitze aufweisen, in die die Verbindungsstücke eingreifen, und daß die Messer gegenüber der Schneide einen dritten vom Rand ausgehenden Schlitz aufweisen, der innen eine Verbreiterung aufweist, in die ein in der Halterung vorgesehener, gegen die Wirkung einer Feder verschiebbarer Bolzen mit abgestuftem Durchmesser eingreift. Auf diese Weise lassen sich die Messer einfach und ohne Werkzeug aus- und einbauen.

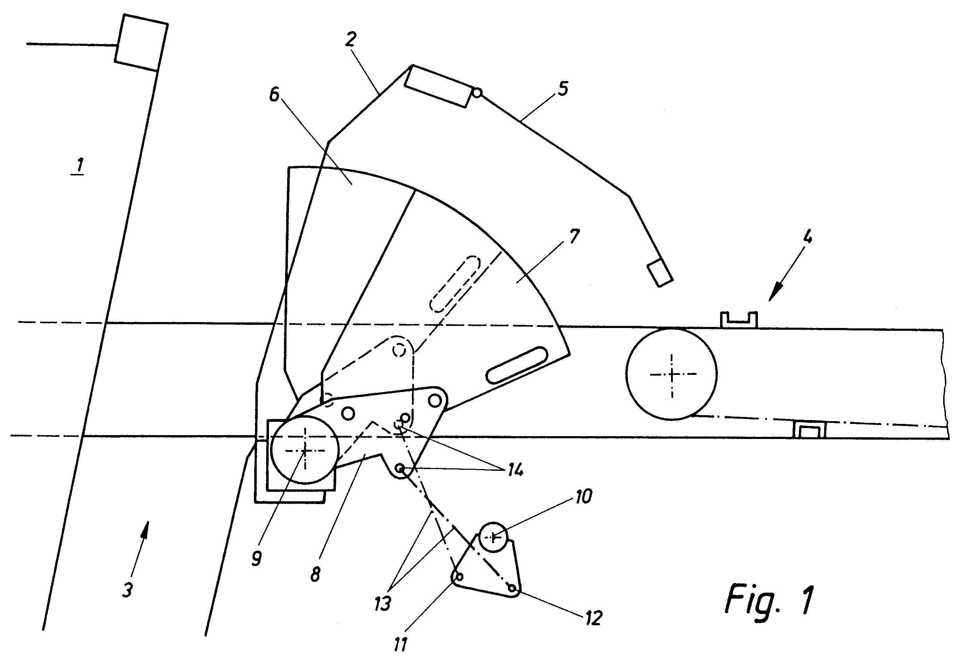

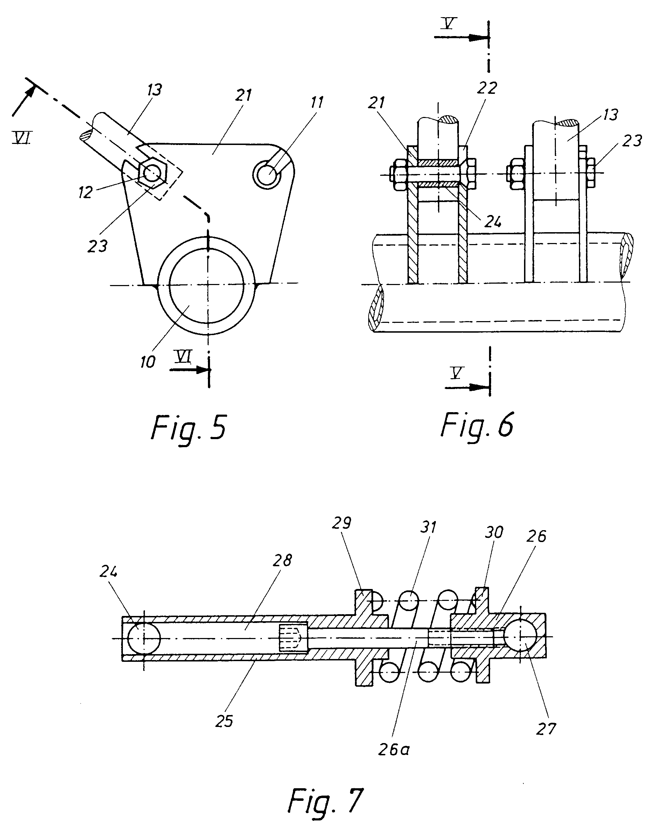

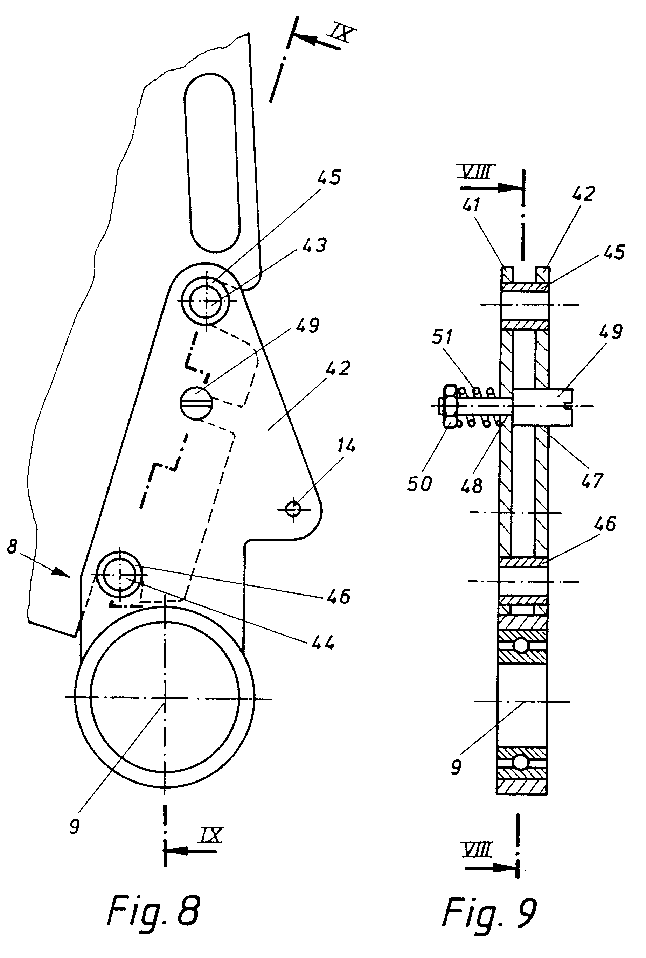

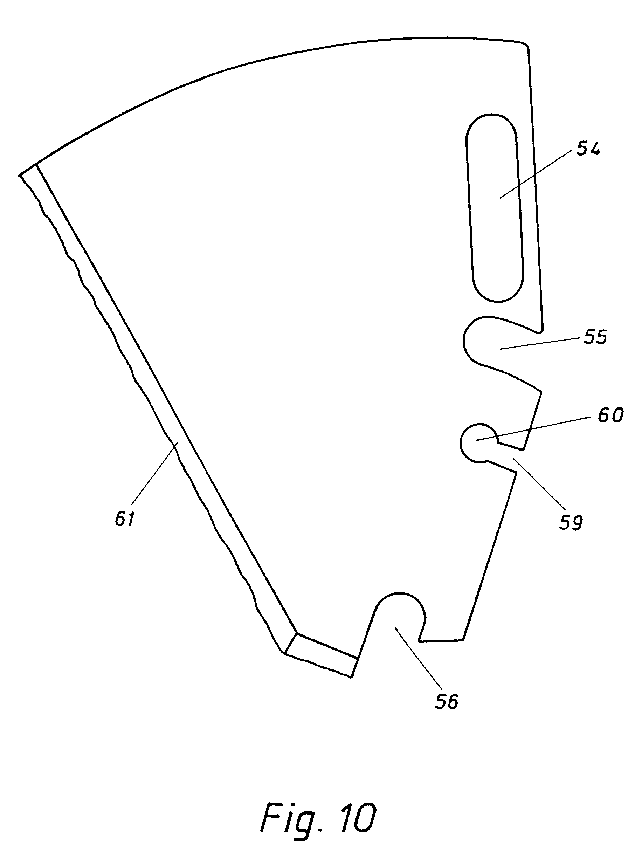

Anhand der beiliegenden Figuren wird die Erfindung näher erläutert. Die Fig. 1-4 zeigen schematisch das erfindungsgemäße Schneidwerk in vier verschiedenen Stellungen; Fig. 5 zeigt einen Querschnitt durch die Querwelle nach Linie V-V in Fig. 6; Fig. 6 zeigt einen Längsschnitt durch die Querwelle nach Linie VI-VI in Fig. 5; Fig. 7 zeigt einen Schnitt durch eine Betätigungsstange; Fig. 8 zeigt einen Querschnitt durch die Achse, um die die Messer schwenkbar sind, und zwar nach Linie VIII-VIII in Fig. 9; Fig. 9 zeigt einen Längsschnitt durch diese Achse nach Linie IX-IX in Fig. 8; und Fig. 10 zeigt ein Messer, das für die Halterung gemäß Fig. 8 und 9 geeignet ist.

Zunächst wird anhand der Fig. 1-4 das Prinzip des erfindungsgemäßen Schneidwerks erläutert. Von dem Ladewagen, für den dieses Schneidwerk bestimmt ist, ist nur die Vorderwand 1 und die Rückwand 2 des Förderkanals 3 und der Kratzboden 4 zu sehen. Das zu ladende Erntegut wird in an sich bekannter Weise durch den Förderkanal 3 nach oben gefördert und fällt dann entlang einer Abdeckung 5 auf den Kratzboden 4. Um das Erntegut zu zerkleinern, sind zwei Messergruppen 6 und 7 vorhanden. (In der Darstellung der Fig. 1-4 ist jeweils nur ein Messer jeder Messergruppe 6 bzw. 7 zu sehen, weil die Messer jeder Messergruppe 6 bzw. 7 exakt hintereinanderliegen.) Insgesamt können z.B. 21 Messer vorhanden sein, die nach Belieben den beiden Messergruppen 6 und 7 zugeordnet werden können, z.B. die ersten beiden Messer der Messergruppe 6, das nächste Messer der Messergruppe 7, die nächsten beiden Messer der Messergruppe 6..., sodaß insgesamt 14 Messer zur Messergruppe 6 und 7 Messer zur Messergruppe 7 gehören. Alle Messer sind in jeweils einer Halterung 8 befestigt, die alle um eine Achse 9 schwenkbar sind. Durch Verschwenkung um diese Achse 9 können die Messer in den Förderkanal 3 ein- und ausgeschwenkt werden. Zu diesem Zweck weist die Rückwand 2 des Förderkanals 3 entsprechende Schlitze auf, die die Messer auch seitlich führen.

Zur Betätigung der Messer ist eine parallel zurAchse 9 verlaufende Querwelle 10 vorgesehen. An dieser Querwelle 10 sind pro Messer zwei Anlenkpunkte 11, 12 vorgesehen. Bei dem gewählten Beispiel haben die Anlenkpunkte 11,12 den gleichen Abstand von der Querwelle 10 und bilden mit dieser einen Winkel von 50°. (Dies ist allerdings nicht zwingend; der Abstand von der Querwelle 10 kann auch etwas unterschiedlich sein, jedoch werden die Verhältnisse dann unübersichtlicher; insbesondere unterscheiden sich dann die einzelnen Drehstellungen der Querwelle 10 um verschiedene Winkel.) Wird die Querwelle 10 um 50° im Uhrzeigersinn gedreht, so nimmt daher der Anlenkpunkt 12 die Lage ein, die zuvor der Anlenkpunkt 11 hatte. An dem Anlenkpunkt 11 oder 12 ist jeweils eine Betätigungsstange 13 angelenkt, die mit ihrem anderen Ende an einem Anlenkpunkt 14 der Halterung 8 angelenkt ist. Wenn die Betätigungsstange 13 am Anlenkpunkt 11 angelenkt ist, gehört das entsprechende Messer zur Messergruppe 6, ist sie am Anlenkpunkt 12 angelenkt, gehört es zur Messergruppe 7.

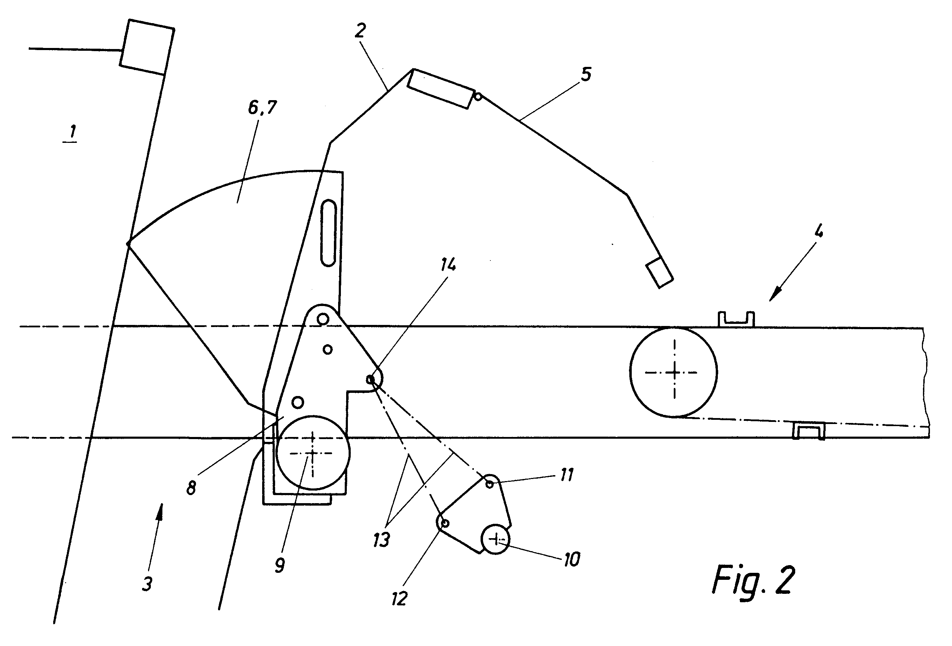

In der in Fig. 2 dargestellten Drehstellung der Querwelle 10 liegen die Anlenkpunkte 11, 12 symmetrisch zur Verbindungslinie zwischen Querwelle 10 und Anlenkpunkt 14. Damit nehmen beide Messergruppen 6 und 7 dieselbe Lage ein: alle Messer sind in den Förderkanal 3 eingeschwenkt.

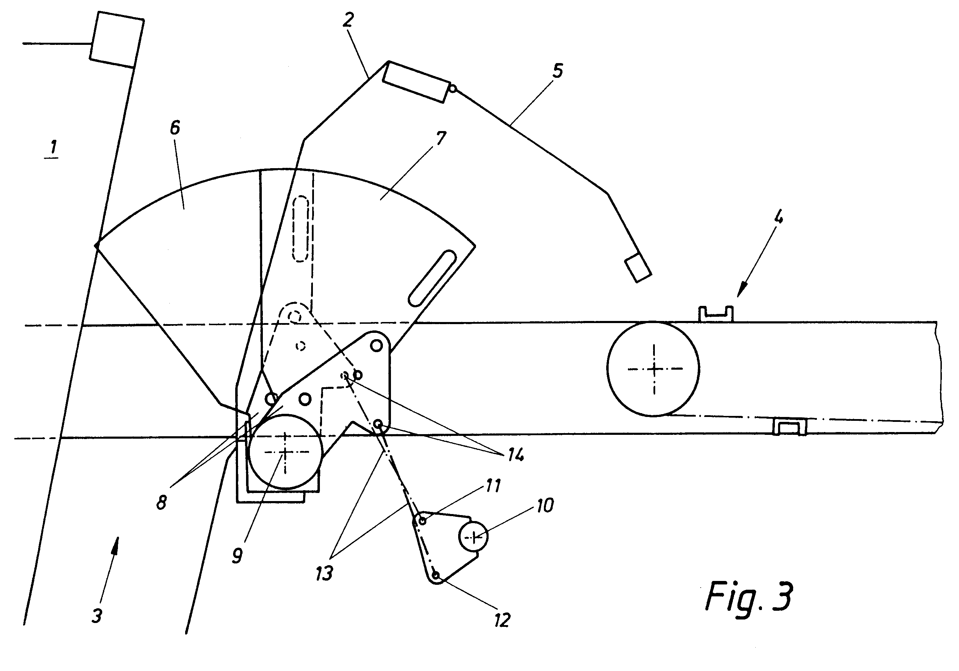

Verdreht man die Querwelle 10 um 50° gegen den Uhrzeigersinn (Fig. 3), so nimmt der Anlenkpunkt 11 die Stellung ein, die zuvor der Anlenkpunkt 12 hatte. Die Messer, deren Betätigungsstange 13 an den Anlenkpunkten 11 angelenkt sind (Messergruppe 6), sind daher weiterhin in den Förderkanal 3 eingeschwenkt; die Messer der Messergruppe 7 sind jedoch ausgeschwenkt.

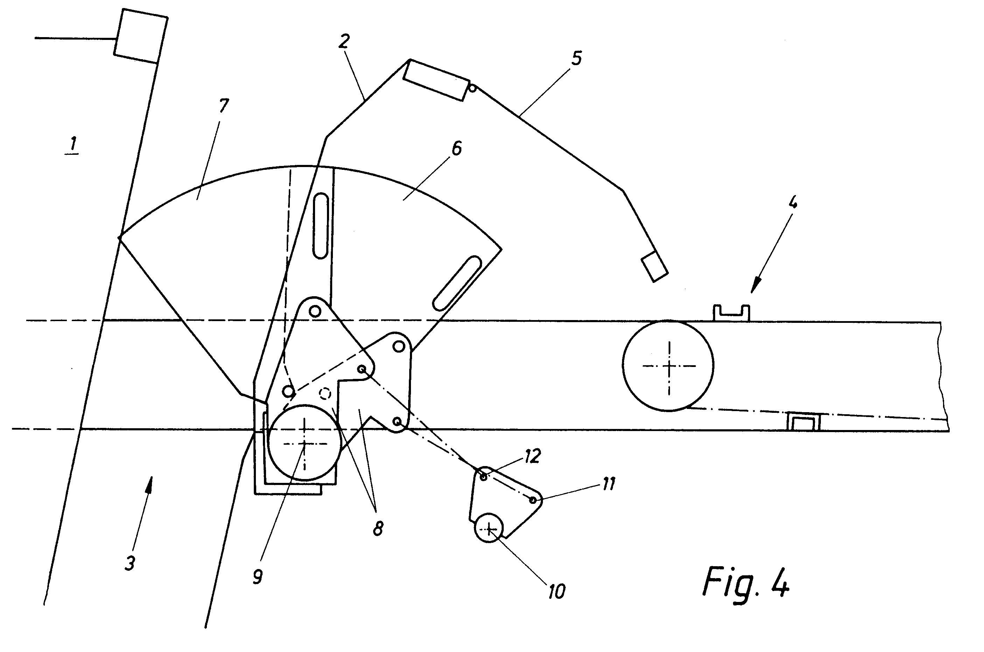

Analoges gilt, wenn man - ausgehend von Fig. 2 - die Querwelle 10 um 50° im Uhrzeigersinn verdreht (Fig. 4). Dann nimmt der Anlenkpunkt 12 die Stellung ein, die zuvor der Anlenkpunkt 11 hatte. Daher sind die Messer, deren Betätigungsstangen13 an den Anlenkpunkten 12 angelenkt sind (Messergruppe 7), in den Förderkanal 3 eingeschwenkt, und die Messergruppe 6 ist ausgeschwenkt.

Verdreht man die Querwelle 10 - ausgehend von der Stellung in Fig. 2 - um 100°, so gelangen alle Messer aus dem Förderkanal heraus (Fig. 1).

Zum Verdrehen der Querwelle 10 kann an deren Ende - also außen am Ladewagen - ein Hebel vorhanden sein, der bei entsprechenden Stellungen der Querwelle 10 einrastet.

Die Fig. 5 und 6 zeigen die Konstruktion der Querwelle 10. An der Querwelle 10 sind pro Messer zwei Platten 21, 22 angeschweißt. Die Anlenkpunkte 11, 12 sind in Form von jeweils einem Loch und einem Schlitz in diesen Platten 21, 22 ausgebildet. Die Betätigungsstange 13 hat eine entsprechende Querbohrung 24, sodaß sie mit einer Schraubverbindung 23 (bestehend aus Schraube und Mutter) drehbar befestigt werden kann. Um die Betätigungsstange 13 am anderen Anlenkpunkt (z.B. 11 statt 12) zu befestigen (und damit das zugehörige Messer der anderen Messergruppe zuzuordnen), braucht somit nur die Schraubverbindung 23 gelöst und am anderen Anlenkpunkt (z.B. 11) wieder befestigt werden. (Diese Arbeit braucht nur vorgenommen werden, wenn die Aufteilung der Messer auf die beiden Messergruppen 6, 7 geändert werden soll; um die Messergruppen6, 7 selektiv einzuschwenken, braucht lediglich die Querwelle 10 gedreht zu werden, was außen am Ladewagen möglich ist.)

In Fig. 7 ist eine bevorzugte Ausführungsform der Betätigungsstange 13 dargestellt. Sie besteht aus drei Teilen 25, 26 und 26a. Der Teil 25 weist eine Längsbohrung 28 auf, in die der Teil 26 mit seinem entsprechenden Ende einschiebbar ist, wodurch sich die Länge der Betätigungsstange ändert. Zwischen den Flanschen 29 und 30 befindet sich eine Druckfeder 31, die bestrebt ist, die beiden Teile 25 und 26 auseinanderzudrücken.

Dadurch wird bewirkt, daß ein Messer, gegen das ein Fremdkörper drückt, aus dem Förderkanal 3 ausschwenken kann, indem es gegen die Wirkung der Feder 31 die beiden Teile 25 und 26 zusammendrückt. Nach Passieren des Fremdkörpers schwenkt es durch die Wirkung der Feder 31 wieder in die Ausgangsstellung zurück. Dadurch werden Beschädigungen am Messer und am übrigen Förderapparat weitgehend vermieden.

Die Querbohrung 24, die zum Anlenken am Anlenkpunkt 11 oder 12 dient und bereits bei Fig. 6 erwähnt wurde, befindet sich im Teil 25. Am gegenüberliegenden Ende, also im Teil 26, befindet sich eine weitere Querbohrung 27. Mit dieser Querbohrung 27 kann die Betätigungsstange 13 am Anlenkpunkt 14 der Halterung 8 angelenkt werden. Wenn die Halterung 8 (s. Fig. 8, 9) aus zwei parallelen Halteplatten 41, 42 besteht und der Anlenkpunkt 14 als jeweils ein Loch in diesen Halteplatten 41, 42 ausgebildet ist, kann die Anlenkung analog wie bei Fig. 5, 6 mittels eines Schraubbolzens erfolgen. Dies ist daher in den Fig. 8, 9 nicht ausgeführt.

In Fig. 8 und 9 ist eine Halterung 8 für ein Messer dargestellt. Das zugehörige Messer ist in Fig. 10 dargestellt; in Fig. 8 ist nur der Abschnitt des Messers zu sehen, mit dem dieses an der Halterung 8 befestigt ist. Die Halterung 8 besteht für jedes Messer aus zwei symmetrischen Halteplatten 41, 42, die auf der Achse 9 drehbar, aber axial unverschiebbar gelagert sind. Sie weisen je zwei Bohrungen 43 und 44 auf, in die rohrförmige Verbindungsstücke 45, 46 eingeschweißt sind. Diese Verbindungsstücke 45, 46 dienen zur Führung des Messers und zur Distanzierung der Halteplatten 41, 42. Weiters weist die Halteplatte 41 eine Bohrung 47 und die Halteplatte 42 an der entsprechenden Stelle eine kleinere Bohrung 48 auf. In diese beiden Bohrungen 47,48 ist ein Bolzen 49 eingesetzt, der eine stufenförmige Verringerung seines Durchmessers aufweist: der größere Durchmesser entspricht dem der Bohrung 47, der kleinere dem der Bohrung 48. Ist der Bolzen 49 ganz eingeschoben, liegt er mit seiner Stufe an der kleineren Bohrung 48 an. An seinem dünneren Ende ist eine Mutter 50 aufgeschraubt; zwischen dieser und der Platte 42 befindet sich eine Druckfeder 51. Diese Druckfeder versucht, den Bolzen 49 ganz einzuschieben, sodaß der Bereich mit dem größeren Durchmesser zwischen den Halteplatten 41 und 42 liegt. Der Bolzen 49 kann aber entgegen der Wirkung der Druckfeder 51 verschoben werden, sodaß der Bereich mit dem kleineren Durchmesser zwischen den Halteplatten 41 und 42 zu liegen kommt.

Das Messer (Fig. 10) hat an den Stellen, die den Verbindungsstücken 45, 46 entsprechen, zwei vom Rand ausgehende Schlitze 55, 56. An der Stelle des Bolzens 49 weist es einen Schlitz 59 auf, der innen eine Verbreiterung 60 hat. Die Maße des Schlitzes 59 und der Verbreiterung 60 entsprechen etwa dem kleineren bzw. dem größeren Durchmesser des Bolzens 49. Oberhalb der Schlitze 55, 56, 59 weist das Messer ein Griffloch 54 auf. Die Schneide 61 ist am gegenüberliegenden Rand vorgesehen.

Das Messer wird wie folgt montiert: man greift es mit einer Hand am Griffloch 54, während man mit der anderen Hand den Bolzen 49 so verschiebt, daß dessen dünnerer Bereich zwischen den Halteplatten 41, 42 liegt. Nun setzt man das Messer mit dem Schlitz 56 auf das Verbindungsstück 46 und schwenkt es solange, bis das Ende des Schlitzes 55 am Verbindungsstück 45 anliegt. Dann läßt man den Bolzen 49 los, sodaß ihn die Feder 51 so verschiebt, daß der dickere Bereich zwischen die Halteplatten 41, 42 und durch die Verbreiterung 60 geht; damit ist das Messer fixiert. Die Demontage erfolgt umgekehrt, also auch ohne Werkzeug.

## Patentansprüche

1. Schneidwerk für einen Ladewagen mit nebeneinanderliegenden, um eine Achse in einen Förderschacht des Ladewagens schwenkbaren Messern, wobei die Messer durch Verdrehen einer zur Achse parallel angeordneten, und mittels Betätigungsstangen die messer betätigenden Querwelle einschwenkbar sind, dadurch gekennzeichnet, daß an der Querwelle (10) pro Messer zwei Anlenkpunkte (11, 12) für eine der Betätigungsstangen vorgesehen sind, daß an jeweils nur einem der beiden Anlenkpunkte (11, 12) je eine der Betätigungsstangen (13) mit einem ihrer Enden angelenkt ist und daß das andere Ende der Betätigungsstangen (13) jeweils am zugehörigen Messer oder dessen Halterung (8) angelenkt ist, sodaß je nach Drehstellung der Querwelle (10) keine Messer, ein Teil der Messer (Messergruppe 6), die übrigen Messer (Messergruppe 7) oder alle Messer in den Förderschacht (3) eingeschwenkt sind.

2. Schneidwerk nach Anspruch 1, dadurch gekennzeichnet, daß die Betätigungsstangen (13) aus zwei gegen die Wirkung einer Feder (31) ineinanderschiebbaren Teilen (25, 26) bestehen.

3. Schneidwerk nach Anspruch 1 oder 2, dadurch gekennzeichnet, daß für die Messer um die Achse (9) schwenkbare Halterungen (8) vorgesehen sind, die jeweils aus zwei parallelen Halteplatten (41, 42) bestehen, zwischen denen die Messer eingesetzt sind, daß die Halteplatten (41, 42) an zwei Stellen durch Verbindungsstücke ( 45, 46 ) miteinander verbunden sind, daß die Messer gegenüber der Schneide (61) zwei vom Rand ausgehende Schlitze (55, 56) aufweisen, in die die Verbindungsstücke (45, 46) eingreifen, und daß die Messer gegenüber der Schneide (61) einen dritten vom Rand ausgehenden Schlitz (59) aufweisen, der innen eine Verbreiterung (60) aufweist, in die ein in der Halterung (8) vorgesehener, gegen die Wirkung einer Feder (51) verschiebbarer Bolzen (49) mit abgestuftem Durchmesser eingreift.

## Claims

1. Cutting device for a loading vehicle with adjacent cutters that are pivotable around an axis and into a conveying shaft, whereby the cutters can be swivelled in by turning a transverse shaft that extends parallel to the axis and actuates the cutters by means of actuating rods, characterized in that for every cutter two coupling points (11, 12) are provided on the transverse shaft (10) for one of the actuating rods, in that at only one of the two coupling points (11, 12) one of the actuating rods (13) each is pivotably attached with one of its ends, and in that the respective other end of the actuating rods (13) is pivotably attached to the corresponding cutter or its mounting (8), so that, depending on the turning position of the transverse shaft (10), either no cutters, one part of the cutters (cutter group 6), or the other cutters (cutter group 7), or all cutters are swivelled into the conveying shaft (3).

2. Cutting device according to Claim 1, characterized in that the actuating rods (13) consist of two parts (25, 26) that can be telescoped against the action of a spring (31).

3. Cutting device according to Claim 1 or 2, characterized in that mountings (8) are provided for the cutters that swivel around an axis (9), which each consists of two parallel support plates (41, 42) that receive the cutters between them, in that the support plates (41, 42) are connected with one another at two points by connecting pieces (45, 46), in that the cutters are provided with two slots (55, 56) opposite the cutting blade that originate at the edge, into which the connecting pieces (45, 46) engage, and in that the cutters are provided with a third slot (59) opposite the cutting blade (61) that originates at the edge and expands on the inside (60), into which a bolt (49) with tapering diameter engages that is provided in the mounting (8) and can be moved against the action of a spring (51).

## Revendications

1. Barre de coupe pour un chargeur mobile avec des lames juxtaposées, pivotantes autour d'un essieu un conduit convoyeur du chargeur mobile, les lames étant orientables par la rotation d'un arbre transversal disposé en position parallèle à l'essieu et actionnant les lames moyennant des barres d'actionnement, caractérisé en ce que sur l'arbre transversal (10) deux points d'articulation (11,12) pour une des barres d'actionnement sont prévus par lame, que seul sur un des deux points d'articulation (11,12) respectivement une des barres d'actionnement (13) est articulée avec une de ses extrémités, et que l'autre extrémité des barres d'actionnement (13) est articulée respectivement à la lame appartenante ou à l'attache (8) de celle-ci, de sorte que suivant la position de rotation de l'arbre transversal (10) aucune lame, une partie des lames (groupe de lames 6), les autres lames (groupe de lames 7) ou toutes les lames sont orientées dans le conduit convoyeur(3).

2. Barre de coupe selon la revendication 1, caractérisée en ce que les barres d'actionnement (13) consistent en deux pièces coulissant (25,26) contre l'effet d'un ressort (31).

3. Barre de coupe selon les revendications 1 ou 2, caractérisée en ce que pour les lames de l'essieu (9) des attaches pivotant (8) autour de l'essieu (9) de sont prévues qui consistent respectivement de deux plaques de maintien (41,42) parallèles, entre lesquelles sont disposées les lames, que les plaques de maintien (41,42) sont reliées l'une à l'autre en deux points par des pièces de raccord (45,46), qu'en face du tranchant (61) les lames présentent des fentes partant du bord (55,56), dans lesquelles s'engrènent les pièces de raccord (45,46), et que les lames présentent en face du tranchant (61) une troisième fente (59) partant du bord, qui présente à l'intérieur un élargissement (60), dans lequel engrène un boulon au diamètre échelonné déplaçable (49) contre l'effet d'un ressort (51) prévu dans l'attache (8).
